# EUROPÄISCHE PATENTSCHRIFT

(11) **EP 1 256 493 B1**
(45) Veröffentlichungstag und Bekanntmachung des Hinweises auf die Patenterteilung: **05.04.2006**
(21) Anmeldenummer: 02090162.5
(22) Anmeldetag: 02.05.2002
(51) Int. Cl.: B60R 22/48

(54) **Verfahren zum Rückhalten eines Fahrzeuginsassen**
Method for restraining an occupant of a vehicle
Méthode pour retenir un occupant de véhicule

(30) Priorität: 07.05.2001 DE 10122048
(43) Veröffentlichungstag der Anmeldung: 13.11.2002
(73) Patentinhaber: TAKATA-PETRI (Ulm) GmbH, 89081 Ulm (DE)
(72) Erfinder: Kopetzky, Robert, Dr., 91207 Lauf- Simonshofen (DE)
(74) Vertreter: Baumgärtel, Gunnar

(56) Entgegenhaltungen:
- EP-A- 1 031 474
- DE-A- 4 112 579
- DE-A- 19 731 689
- DE-U- 29 717 477

## Beschreibung

Die vorliegende Erfindung betrifft ein Verfahren zum Rückhalten eines Fahrzeuginsassen mit Hilfe eines Fahrzeugrückhaltesystems, das einen aufrollbaren Dreipunkt-Sicherheitsgurt umfasst.

Es ist bekannt, in Rückhaltesystemen die auftretende Gurtkraft beispielsweise dadurch zu begrenzen, dass ein deformierbares Element, beispielsweise ein Torsionsstab, im Falle eines Unfalls deformiert wird, wodurch Energie dissipiert und die auf den Fahrzeuginsassen wirkende Gurtkraft zeitweise begrenzt wird.

Aus der Druckschrift EP 1 031 474 A2 ist ein Rückhaltesystem mit den Merkmalen des Oberbegriffs des Anspruchs 1 bekannt. Bei diesem System wird unter anderem der Abstand zwischen einem Airbag und dem Fahrzeuginsassen gemessen und ein Nachlassen des Sicherheitsgurtes entsprechend gesteuert.

In der Druckschrift DE 197 31 689 A1 ist ein Rückhaltesystem mit einem Elektromotor beschrieben; in Abhängigkeit u. a. vom Insassengewicht und der Sitzposition wird eine Gurtkraftbegrenzung eingestellt.

Die Schrift DE 41 12 579 A1 offenbart eine Inneneinrichtung für ein Kraftfahrzeug, bei der eine Stoßbelastung für den Fahrzeuginsassen mit einer Steuereinrichtung so gering wie möglich gehalten wird.

Es ist die Aufgabe der vorliegenden Erfindung, ein Verfahren zum Rückhalten eines Fahrzeuginsassen zu schaffen, mit dem eine Verletzungsgefahr im Falle eines Unfalls weiter reduziert ist.

Die Lösung dieser Aufgabe erfolgt durch die Merkmale des Anspruchs 1. Erfindungsgemäß wird im Falle eines Unfalls eine von dem Sicherheitsgurt auf den Fahrzeuginsassen übertragene Reaktionskraft (Gurtkraft) in einem Aufroller, im Bereich einer Gurtumlenkung, in einem Endbeschlag oder in einem Gurtschloss des Sicherheitsgurtes gemessen und ein gezieltes Nachlassen des Sicherheitsgurtes so gesteuert, dass die Gurtkraft einen vorgegebenen Maximalwert nicht überschreitet.

Erfindungsgemäß wird die auf den Fahrzeuginsassen wirkende Belastung nicht passiv begrenzt, sondern die tatsächlich auftretende Gurtkraft wird gemessen und in Abhängigkeit von dieser gemessenen Gurtkraft wird der

Sicherheitsgurt so nachgelassen, daß der vorgegebene Maximalwert nicht überschritten wird. Hierbei ist es bevorzugt, die maximale Verzögerung des Insassen möglichst früh mit Hilfe des Sicherheitsgurtes zu bewirken und diese maximale Verzögerung im weiteren Verlauf beizubehalten.

Vorteilhafte Ausführungsformen der Erfindung sind in der Beschreibung sowie in den Unteransprüchen beschrieben.

Nach einer ersten vorteilhaften Ausführungsvariante des erfindungsgemäßen Verfahrens wird auch eine Vorverlagerung des Fahrzeuginsassen gemessen und zusätzlich in Abhängigkeit von dieser Vorverlagerung das Nachlassen des Sicherheitsgurtes gesteuert. Die Vorverlagerung wird dabei vorzugsweise in Abhängigkeit von der Zeit gemessen, so daß in Echtzeit ein Rückhalten des Fahrzeuginsassen erfolgen kann.

Das Nachlassen des Sicherheitsgurtes kann durch eine aktiv beeinflußbare Bremseinrichtung erfolgen, die auf den Sicherheitsgurt einwirkt. Es kann beispielsweise eine Wirbelstrombremse oder eine mechanische Bremse mit einem Reibschluß vorgesehen werden

Die Vorverlagerung des Fahrzeuginsassen kann durch Ermitteln der Drehbewegung einer Spindel eines Gurtaufrollers des Sicherheitsgurtes gemessen werden. Alternativ oder zusätzlich ist es möglich, die Vorverlagerung des Fahrzeuginsassen durch einen Strahlungssensor, beispielsweise ein Infrarotsensor oder eine Miniaturkamera zu ermitteln, der im Innenraum des Fahrzeugs angeordnet ist.

Bevorzugt wird das Gewicht des Fahrzeuginsassen gemessen, beispielsweise durch eine in den Fahrzeugsitz integrierte Einrichtung, und es wird zusätzlich in Abhängigkeit von dem gemessenen Gewicht ein gezieltes Nachlassen des Sicherheitsgurtes gesteuert. Hierdurch können die auftretenden Gurtkräfte genauer an den jeweiligen Fahrzeuginsassen angepaßt werden.

Bevorzugt wird ein gezieltes Nachlassen des Sicherheitsgurtes erst dann bewirkt, nachdem durch eine Gurtstraffereinrichtung der Sicherheitsgurt gestrafft worden ist.

Das gezielte Nachlassen des Sicherheitsgurtes kann so gesteuert werden, daß der vorgegebene Maximalwert der Gurtkraft, bezogen auf die Dauer der Unfalleinwirkung, möglichst frühzeitig erreicht und während der Dauer der Unfalleinwirkung beibehalten wird.

Die vorliegende Erfindung umfaßt auch ein Fahrzeugrückhaltesystem zur Durchführung des erfindungsgemäßen Verfahrens mit den in den Verfahrensansprüchen angegebenen Vorrichtungsmerkmalen.

Nachfolgend wird die vorliegende Erfindung rein beispielhaft anhand einer vorteilhaften Ausführungsform beschrieben. Es zeigen:
- Fig. 1: eine schematische Seitenansicht eines Fahrzeugrückhaltesystems; und
- Fig. 2: ein schematisches Schaltdiagramm des Rückhaltesystems von Fig. 1.

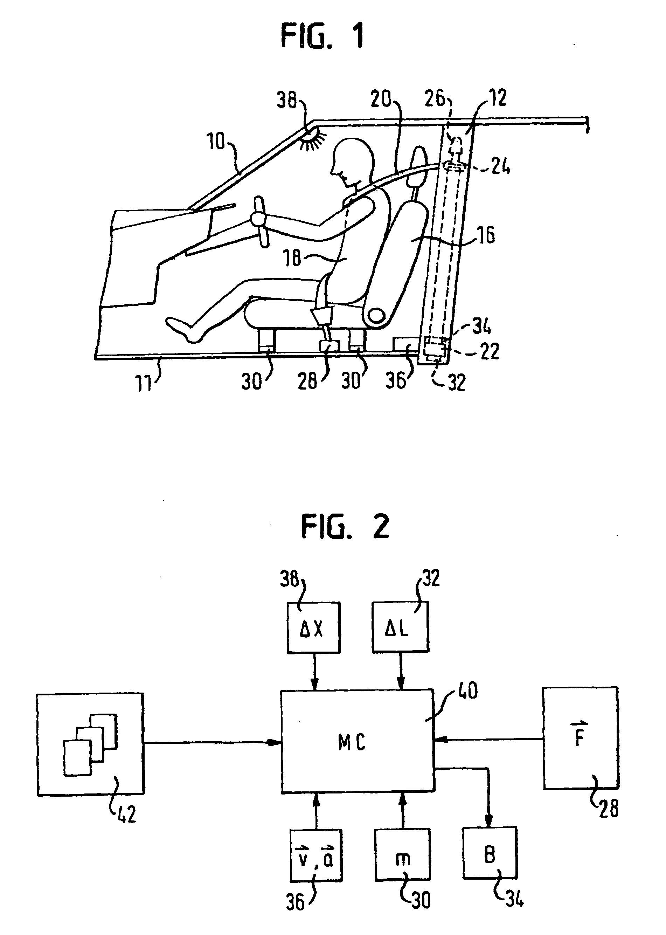

Fig. 1 zeigt eine schematische Seitenansicht eines Rückhaltesystems, das in einem Fahrzeug installiert ist. Von dem Fahrzeug ist eine A-Säule 10, eine B-Säule 12 sowie ein Fahrzeugboden 11 dargestellt, auf dem sich ein Fahrzeugsitz 16 befindet. Auf dem Fahrzeugsitz 16 ist ein Fahrzeuginsasse 18 dargestellt, der mit einem Dreipunkt-Sicherheitsgurt 20 angegurtet ist. Der Sicherheitsgurt 20 ist auf bekannte Weise in einem Gurtaüfroller 22 aufgerollt und an der B-Säule 12 über eine Gurtumlenkung 24 geführt, die an einen Gurtstraffer 26 gekoppelt ist. Das andere Ende des Sicherheitsgurtes 20 ist über eine Kraftmeßeinrichtung 28 fest an den Fahrzeugboden 11 gekoppelt.

Der Fahrzeugsitz 16 ist an seinen Bodenstützen mit einer Einrichtung zur Gewichtsbestimmung 30 versehen, mit der das Gewicht bzw. die Masse des auf dem Fahrzeugsitz 16 befindlichen Insassen 18 ermittelt werden kann. Ferner ist in dem Gurtaufroller 22 eine Meßeinrichtung 32 für die abgezogene Gurtlänge sowie eine Bremseinrichtung 34 vorgesehen, mit der das Ausziehen des Gurtbandes blockiert werden kann. Am Fahrzeugboden 11 ist ferner eine Meßeinrichtung 36 vorgesehen, mit der die Geschwindigkeit und die Beschleunigung des Fahrzeuges ermittelt werden können. Alternativ kann der Crash Sensor verwendet werden, der zur Auslösung des Airbags dient.

Im Bereich der A-Säule 10 befindet sich schließlich ein Sensor 38, mit dem die Vorverlagerung des Fahrzeuginsassen 18 detektierbar ist. Bei dem Sensor 38 kann es sich um einen Infrarotsensor, eine Videokamera oder dergleichen handeln.

Fig. 2 zeigt ein schematisches Schaltdiagramm des erfindungsgemäßen Rückhaltesystems.

Wie Fig. 2 zeigt, ist eine Steuerung 40 vorgesehen, die mit einem Speicher 42 in Verbindung steht. Ferner steht die Steuerung 40 mit dem Sensor 38, der Meßeinrichtung 32 für die ausgezogene Gurtlänge, mit der Kraftmeßeinrichtung 28, mit der Meßeinrichtung 36 für die Geschwindigkeit und Beschleunigung des Fahrzeugs, mit der Gewichtsmeßeinrichtung 30 sowie mit der Bremseinrichtung 34 in Verbindung.

Bei dem erfindungsgemäßen Verfahren zum Rückhalten des Fahrzeuginsassen 18 wird im Falle eines Unfalls durch die Meßeinrichtung 36 die hierbei entstehende Beschleunigung bzw. Geschwindigkeitsänderung detektiert und es wird ein Unfallsignal an die Steuerung 40 ausgegeben. In Abhängigkeit von einer im Speicher 42 abgespeicherten zulässigen Vorverlagerung des Fahrzeuginsassen wird über die Bremseinrichtung 34 ein gezieltes Nachlassen des Sicherheitsgurtes 20 so gesteuert, daß die auf den Fahrzeuginsassen übertragene Reaktionskraft (Gurtkraft) einen in dem Speicher 42 abgespeicherten, vorgegebenen Maximalwert nicht überschreitet.

Erfindungsgemäß wird die Vorverlagerung des Fahrzeuginsassen 18 von dem Sensor 38 ermittelt und in Abhängigkeit von dieser gemessenen Vorverlagerung wird mit Hilfe der Bremseinrichtung 34 ein gezieltes Nachlassen des Sicherheitsgurtes 20 gesteuert. Bevorzugt sind dabei in dem Speicher 42 Kennfelder für zulässige Maximalwerte für Insassenbelastungen abgespeichert. Diese abgespeicherten Werte können durch mit Hilfe von Dummies durchgeführte Versuche ermittelt werden. Es kann sich hierbei um Beschleunigungen, Kräfte, Drehmomente und Wege, z.B. Brusteindrückung, an den bislang üblichen Meßpunkten von Dummies handeln. Bevorzugt erfolgt das Auslesen der Werte aus den Kennfeldern in dem Speicher 42 in Abhängigkeit von Insassenkennwerten, d.h. beispielsweise dem Körpergewicht des Fahrzeuginsassen, das durch die Meßeinrichtung 30 ermittelt worden ist. Ferner kann der zulässige Maximalwert in Abhängigkeit von der Fahrzeugverzögerung ausgelesen werden, die durch die Meßeinrichtung 36 zur Verfügung gestellt wird.

Alternativ oder zusätzlich zu dem Sensor 38 kann zur Ermittlung der Vorverlagerung des Fahrzeuginsassen 18 die Meßeinrichtung 32 eingesetzt werden, welche die Gurtauszugslänge ermittelt. Außerdem kann ein gezieltes Nachlassen des Sicherheitsgurtes mit Hilfe der Bremseinrichtung 34 erst dann bewirkt werden, nachdem der Sicherheitsgurt 20 durch die Gurtstraffereinrichtung 26 gestrafft worden ist.

Bevorzugt erfolgt die Steuerung des erfindungsgemäßen Rückhaltesystems in Echtzeit. Ziel des erfindungsgemäßen Verfahrens ist stets die größtmögliche Verringerung der auf den Fahrzeuginsassen wirkenden Belastungswerte durch gezieltes und elektronisch gesteuertes Nachlassen des Sicherheitsgurtes im Falle eines Unfalls, insbesondere in Abhängigkeit von der Schwere des Unfalls, dem Unfallverlauf und der Größe bzw. dem Gewicht des Fahrzeuginsassen.

### Bezugszeichenliste

- 10: A-Säule
- 11: Fahrzeugboden
- 12: B-Säule
- 16: Fahrzeugsitz
- 18: Fahrzeuginsasse
- 20: Sicherheitsgurt
- 22: Gurtaufroller
- 24: Gurtumlenkung
- 26: Gurtstraffer
- 28: Kraftmeßeinrichtung
- 30: Gewichtsmeßeinrichtung
- 32: Meßeinrichtung für Gurtauszugslänge
- 34: Bremseinrichtung
- 36: Meßeinrichtung für Geschwindigkeit und Beschleunigung
- 38: Sensor für Vorverlagerung
- 40: Steuerung
- 42: Speicher

## Patentansprüche

1. Verfahren zum Rückhalten eines Fahrzeuginsassen mit Hilfe eines Fahrzeugrückhaltesystems, das einen aufrollbaren Dreipunkt-Sicherheitsgurt umfasst, bei welchem Verfahren im Falle eines Unfalls eine zugelassene Vorverlagerung des Fahrzeuginsassen berücksichtigt und in Abhängigkeit von dieser zugelassenen Vorverlagerung ein gezieltes Nachlassen des Sicherheitsgurtes gesteuert wird,
**dadurch gekennzeichnet,**
- **dass** die von dem Sicherheitsgurt auf den Fahrzeuginsassen übertragene Gurtkraft in einem Aufroller, im Bereich einer Gurtumlenkung, in einem Endbeschlag oder in einem Gurtschloss des Sicherheitsgurtes gemessen wird und
- **dass** das gezielte Nachlassen des Sicherheitsgurtes so gesteuert wird, dass die auf den Fahrzeuginsassen übertragene Gurtkraft einen vorgegebenen Maximalwert nicht überschreitet.

2. Verfahren nach Anspruch 1,
**dadurch gekennzeichnet, daß**
eine Vorverlagerung des Fahrzeuginsassen, vorzugsweise in Abhängigkeit von der Zeit, gemessen wird und in Abhängigkeit von dieser gemessenen Vorverlagerung sowie in Abhängigkeit von Fahrzeugkennwerten ein gezieltes Nachlassen des Sicherheitsgurtes gesteuert wird.

3. Verfahren nach Anspruch 1,
**dadurch gekennzeichnet, daß**
die zugelassene Vorverlagerung des Fahrzeuginsassen aus einem Speicher abgerufen wird und in Abhängigkeit von dieser gespeicherten Vorverlagerung sowie in Abhängigkeit von Fahrzeugkennwerten und in Abhängigkeit von Insassenkennwerten ein gezieltes Nachlassen des Sicherheitsgurtes gesteuert wird.

4. Verfahren nach zumindest einem der vorstehenden Ansprüche,
**dadurch gekennzeichnet, daß**
als Fahrzeugkennwerte Beschleunigung und/oder Geschwindigkeit des Fahrzeuges und als Insassenkennwerte Größe und/oder Gewicht des Insassen verwendet werden.

5. Verfahren nach zumindest einem der vorstehenden Ansprüche,
**dadurch gekennzeichnet, daß**
die Vorverlagerung des Fahrzeuginsassen durch Ermitteln der Drehbewegung einer Spindel eines Gurtaufrollers des Sicherheitsgurtes gemessen wird.

6. Verfahren nach zumindest einem der vorstehenden Ansprüche,
**dadurch gekennzeichnet, daß**
die Vorverlagerung des Fahrzeuginsassen durch einen Strahlungssensor, insbesondere einen Infrarotsensor oder eine Kamera, im Innenraum des Fahrzeugs ermittelt wird.

7. Verfahren nach zumindest einem der vorstehenden Ansprüche,
**dadurch gekennzeichnet, daß**
das Gewicht des Fahrzeuginsassen gemessen und zusätzlich in Abhängigkeit von dem gemessenen Gewicht ein gezieltes Nachlassen des Sicherheitsgurtes gesteuert wird.

8. Verfahren nach zumindest einem der vorstehenden Ansprüche,
**dadurch gekennzeichnet, daß**
ein gezieltes Nachlassen des Sicherheitsgurtes erst dann bewirkt wird, nachdem durch eine Gurtstraffereinrichtung der Sicherheitsgurt gestrafft worden ist.

9. Verfahren nach zumindest einem der vorstehenden Ansprüche,
**dadurch gekennzeichnet, daß**
in einem Speicher einer Steuerung vorgegebene Maximalwerte in einem Kennfeld abgespeichert werden, daß im Falle eines Unfalls in Abhängigkeit von Fahrzeugkennwerten, wie Geschwindigkeit oder Verzögerung, und/oder von Insassenkennwerten, wie Größe oder Gewicht, abgespeicherte Maximalwerte aus dem Speicher ausgelesen werden, und daß das Nachlassen des Sicherheitsgurtes in Abhängigkeit von den ausgelesenen Maximalwerten so erfolgt, daß die Gurtkraft diese Maximalwerte unterschreitet.

10. Verfahren nach zumindest einem der vorstehenden Ansprüche,
**dadurch gekennzeichnet, daß**
das Nachlassen des Sicherheitsgurtes in Abhängigkeit von dem Unfallverlauf gesteuert wird.

11. Verfahren nach zumindest einem der vorstehenden Ansprüche,
**dadurch gekennzeichnet, daß**
das Nachlassen des Sicherheitsgurtes in Echtzeit gesteuert wird.

12. Verfahren nach zumindest einem der vorstehenden Ansprüche,
**dadurch gekennzeichnet, daß**
das gezielte Nachlassen des Sicherheitsgurtes so gesteuert wird, daß der vorgegebene Maximalwert der Gurtkraft - bezogen auf die Dauer der Unfalleinwirkung - möglichst frühzeitig erreicht und während der Dauer der Unfalleinwirkung beibehalten wird.

13. Verfahren nach zumindest einem der vorstehenden Ansprüche,
**dadurch gekennzeichnet, daß**
das Nachlassen des Sicherheitsgurtes durch eine aktiv beeinflußbare, auf den Sicherheitsgurt wirkende Bremseinrichtung, beispielsweise eine Wirbelstrombremse, gesteuert wird.

14. Verfahren nach zumindest einem der vorstehenden Ansprüche,
**dadurch gekennzeichnet, daß**
die zugelassene Vorverlagerung des Fahrzeuginsassen in Abhängigkeit von einer gemessenen Unfallschwere aus abgespeicherten Tabellen abgerufen wird.

15. Verfahren nach zumindest einem der vorstehenden Ansprüche,
**dadurch gekennzeichnet, daß**
bei einem frühzeitigen Erreichen der zugelassenen Vorverlagerung das Nachlassen des Sicherheitsgurtes so gesteuert wird, daß stets ein degressiver Kraftverlauf gewährleistet ist.

16. Fahrzeugrückhaltesystem zur Durchführung des Verfahrens nach einem der vorstehenden Ansprüche.

## Claims

1. Method for restraining an occupant of a vehicle with the aid of a vehicle restraint system which comprises a retractable three-point seatbelt, in which method, in the case of an accident, a permitted forward displacement of the occupant of the vehicle is taken into consideration and a specific slackening of the seatbelt is controlled as a function of this permitted forward displacement, **characterized**
- **in that** the belt force transmitted by the seatbelt to the occupant of the vehicle is measured in a retractor, in the region of a belt deflection, in an end fitting or in a belt buckle of the seatbelt, and
- **in that** the specific slackening of the seatbelt is controlled in such a manner that the belt force transmitted to the occupant of the vehicle does not exceed a predetermined maximum value.

2. Method according to Claim 1, **characterized in that** a forward displacement of the occupant of the vehicle is measured, preferably as a function of the time, and a specific slackening of the seatbelt is controlled as a function of this measured forward displacement and as a function of characteristic values of the vehicle.

3. Method according to Claim 1, **characterized in that** the permitted forward displacement of the occupant of the vehicle is retrieved from a memory and a specific slackening of the seatbelt is controlled as a function of this stored forward displacement and as a function of characteristic values of the vehicle and as a function of characteristic values of the occupant.

4. Method according to at least one of the preceding claims, **characterized in that** acceleration and/or speed of the vehicle are used as characteristic values of the vehicle and size and/or weight of the occupant are used as characteristic values of the occupant.

5. Method according to at least one of the preceding claims, **characterized in that** the forward displacement of the occupant of the vehicle is measured by determining the rotational movement of a spindle of a belt retractor of the seatbelt.

6. Method according to at least one of the preceding claims, **characterized in that** the forward displacement of the occupant of the vehicle is determined by a radiation sensor, in particular an infrared sensor or a camera, in the interior of the vehicle.

7. Method according to at least one of the preceding claims, **characterized in that** the weight of the occupant of the vehicle is measured and a specific slackening of the seatbelt is controlled additionally as a function of the measured weight.

8. Method according to at least one of the preceding claims, **characterized in that** a specific slackening of the seatbelt is brought about only after the seatbelt has been tightened by a belt-tightening device.

9. Method according to at least one of the preceding claims, **characterized in that** predetermined maximum values are stored in a characteristic diagram in a memory of a control system, **in that**, in the case of an accident, stored maximum values are read from the memory as a function of characteristic values of the vehicle, such as speed or deceleration, and/or characteristic values of the occupant, such as size or weight, and **in that** the slackening of the seatbelt takes place as a function of the read maximum values in such a manner that the belt force falls short of these maximum values.

10. Method according to at least one of the preceding claims, **characterized in that** the slackening of the seatbelt is controlled as a function of the course of the accident.

11. Method according to at least one of the preceding claims, **characterized in that** the slackening of the seatbelt is controlled in real time.

12. Method according to at least one of the preceding claims, **characterized in that** the specific slackening of the seatbelt is controlled in such a manner that the predetermined maximum value of the belt force is achieved as early as possible - with regard to the duration of the action of the accident - and is maintained during the duration of the action of the accident.

13. Method according to at least one of the preceding claims, **characterized in that** the slackening of the seatbelt is controlled by a braking device which can be influenced actively and acts on the seatbelt, for example an eddy current brake.

14. Method according to at least one of the preceding claims, **characterized in that** the permitted forward displacement of the occupant of the vehicle is retrieved from stored charts as a function of a measured severity of the accident.

15. Method according to at least one of the preceding claims, **characterized in that** when the permitted forward displacement is reached at an early point, the slackening of the seatbelt is controlled in such a manner that a degressive force profile is always ensured.

16. Vehicle restraint system for carrying out the method according to one of the preceding claims.

## Revendications

1. Procédé pour retenir un occupant de véhicule à l'aide d'un système de retenue d'un véhicule qui comprend une ceinture de sécurité à trois points enroulable, lequel procédé faisant intervenir un déplacement en avant autorisé de l'occupant du véhicule dans le cas d'un accident, et actionnant un relâchement approprié de la ceinture de sécurité en fonction de ce déplacement en avant autorisé,
**caractérisé en ce que**,
- l'effort de la ceinture transmis par la ceinture de sécurité à l'occupant du véhicule est mesuré dans un enrouleur, dans la zone d'un guide de ceinture, dans un embout d'ancrage ou dans une boucle de ceinture de la ceinture de sécurité et
- le relâchement approprié de la ceinture de sécurité est actionné de sorte que l'effort de la ceinture transmis à l'occupant du véhicule ne dépasse pas une valeur maximale prédéfinie.

2. Procédé selon la revendication 1, **caractérisé en ce qu'**un déplacement en avant de l'occupant du véhicule est mesuré de préférence en fonction du temps et **en ce qu'**un relâchement approprié de la ceinture de sécurité est actionné en fonction de ce déplacement en avant mesuré ainsi qu'en fonction de paramètres relatifs au véhicule.

3. Procédé selon la revendication 1, **caractérisé en ce que** le déplacement en avant autorisé de l'occupant du véhicule est extrait à partir d'une mémoire et **en ce qu'**un relâchement approprié de la ceinture de sécurité est actionné, en fonction de ce déplacement en avant mémorisé ainsi qu'en fonction de paramètres relatifs au véhicule et en fonction de paramètres relatifs à l'occupant.

4. Procédé selon au moins une des revendications précédentes, **caractérisé en ce que** l'accélération et/ou la vitesse du véhicule sont utilisées comme paramètres relatifs au véhicule et **en ce que** la taille et/ou le poids de l'occupant sont utilisés comme paramètres relatifs à l'occupant.

5. Procédé selon au moins une des revendications précédentes, **caractérisé en ce que** le déplacement en avant de l'occupant du véhicule est mesuré par la détermination du mouvement de rotation d'un axe d'un enrouleur de ceinture de la ceinture de sécurité.

6. Procédé selon au moins une des revendications précédentes, **caractérisé en ce que** le déplacement en avant de l'occupant du véhicule est déterminé dans l'habitacle du véhicule par un capteur à rayonnement, en particulier par un capteur à infrarouge ou une caméra.

7. Procédé selon au moins une des revendications précédentes, **caractérisé en ce que** le poids de l'occupant du véhicule est mesuré et **en ce que** en plus, un relâchement approprié de la ceinture de sécurité est actionné en fonction du poids mesuré.

8. Procédé selon au moins une des revendications précédentes, **caractérisé en ce qu'**un relâchement approprié de la ceinture de sécurité n'est provoqué qu'une fois la ceinture de sécurité tendue par un dispositif de pré-tension de la ceinture.

9. Procédé selon au moins une des revendications précédentes, **caractérisé en ce que** des valeurs maximales prédéfinies dans un diagramme caractéristique sont enregistrées dans une mémoire d'une commande, **en ce que**, en cas d'accident, les valeurs maximales mémorisées sont extraites de la mémoire en fonction de paramètres relatifs au véhicule, tels que la vitesse ou la décélération, et/ou de paramètres relatifs à l'occupant, tels que la taille ou le poids, et **en ce que** le relâchement de la ceinture de sécurité en fonction des valeurs maximales extraites est réalisé de sorte que l'effort de la ceinture demeure en deçà de ces valeurs maximales.

10. Procédé selon au moins une des revendications précédentes, **caractérisé en ce que** le relâchement de la ceinture de sécurité est actionné en fonction du déroulement de l'accident.

11. Procédé selon au moins une des revendications précédentes, **caractérisé en ce que** le relâchement de la ceinture de sécurité est actionné en temps réel.

12. Procédé selon au moins une des revendications précédentes, **caractérisé en ce que** le relâchement approprié de la ceinture de sécurité est actionné de sorte que la valeur maximale prédéfinie de l'effort de la ceinture, par rapport à la durée de l'effet de l'accident, soit atteinte le plus prématurément possible et soit conservée pendant la durée de l'effet de l'accident.

13. Procédé selon au moins une des revendications précédentes, **caractérisé en ce que** le relâchement de la ceinture de sécurité est actionné par un dispositif de freinage pouvant être activement influencé et agissant sur la ceinture de sécurité, par exemple un frein à courant de Foucault.

14. Procédé selon au moins une des revendications précédentes, **caractérisé en ce que** le déplacement en avant autorisé de l'occupant du véhicule est extrait de tableaux mémorisés en fonction d'une gravité mesurée de l'accident.

15. Procédé selon au moins une des revendications précédentes, **caractérisé en ce que**, lorsque le déplacement en avant autorisé a été atteint prématurément, le relâchement de la ceinture de sécurité est actionné de sorte qu'un déroulement de l'effort constamment dégressif soit assuré.

16. Système de retenue d'un véhicule pour réaliser le procédé selon l'une des revendications précédentes.
